# EUROPÄISCHE PATENTSCHRIFT

(11) **EP 0 769 659 B1**
(45) Veröffentlichungstag und Bekanntmachung des Hinweises auf die Patenterteilung: **01.09.1999**
(21) Anmeldenummer: 96115714.6
(22) Anmeldetag: 01.10.1996
(51) Int. Cl.: F24D 3/16

(54) **Kontaktelement und Deckenelement für eine Heiz- und Kühldecke**
Contact element and ceiling element for heating or cooling ceiling
Elément de contact et élément de plafond pour chauffage ou refroidissement par le plafond

(30) Priorität: 06.10.1995 CH 282295
(43) Veröffentlichungstag der Anmeldung: 23.04.1997
(73) Patentinhaber: BARCOL-AIR AG, 8712 Stäfa (CH)
(72) Erfinder: Sokolean, Helmuth, 8713 Uerikon (CH)
(74) Vertreter: Wagner, Wolfgang, Dr. Phil., Dipl.-Phys.

(56) Entgegenhaltungen:
- EP-A- 0 406 476
- CH-A- 241 602
- NL-A- 291 742

## Beschreibung

Die Erfindung betrifft ein Kontaktelement für eine Heiz- und Kühldecke gemäss dem Oberbegriff des Anspruchs 1 sowie ein ein derartiges Kontaktelement umfassendes Deckenelement. Eine derartige Lösung ist etwa aus der EP-A-0 406 476 bekannt. Der Kontakt zwischen der durchgehend ausgebildeten Kontaktfläche und dem Deckenelement ist dort durch Magnete hergestellt, was jedoch, abgesehen vom nichtpermanenten Charakter der Verbindung, Einschränkungen in der Materialwahl und dem zulässigen Temperaturbereich nach sich zieht.

Es sind verschiedene weitere Ausführungen von Kontakt- und Deckenelementen bekannt, die für Heizdecken und Kühldecken sowie Decken, die sowohl zum Heizen als auch zum Kühlen bestimmt sind, verwendet werden können. Einige solcher Ausführungen sind beschrieben in H. Sokolean:
"Kühldeckentechnologie zur Erreichung des bestmöglichen Raumkomforts", Architektur und Technik 8/92, S. 49 - 53, B+L Verlags AG, Schlieren (Schweiz).

Eines der Grundprobleme von Deckenelementen der hier angesprochenen Art ist stets die Sicherstellung guten Wärmeübergangs zwischen einem Wärmeträgermedium, gewöhnlich einer Flüssigkeit, welche das Element durchströmt und der Deckenplatte, die das Deckenelement nach unten, also gegen den zu klimatisierenden Raum hin, abschliesst. Für dieses Problem existieren technisch befriedigende Lösungen, wie sie aus dem obengenannten Artikel hervorgehen. So kann z. B. ein Deckenelement einstückig mit der Deckenplatte und einer an der Oberseite desselben angeordneten Führung, in welche als Korrosionsschutz gegenüber der Flüssigkeit ein Kupfer- oder Stahlrohr eingezogen ist, aus Aluminium extrudiert sein. Diese Ausführung ist jedoch aufwendig und entsprechend teuer.

Weniger teuer sind Lösungen, bei denen die Führung Teil eines getrennt von der Deckenplatte hergestellten, z. B. aus Aluminium oder einem anderen korrosionsfesten Material extrudierten Kontaktelements ist, dessen Kontaktfläche zur Gänze mit der Deckenplatte verklebt ist. Es hat sich jedoch herausgestellt, dass bei dieser an sich bewährten Lösung wegen der geringen Wärmeleitfähigkeit des Klebstoffs trotz der geringen Dicke der Klebstoffschicht an derselben ein merklicher Temperatursprung auftritt, der die Heiz- und Kühlleistung beträchtlich vermindert. Vor allem bei der Kühlung geht ein beträchtlicher Anteil der ohnedies nicht sehr grossen Differenz zwischen der Solltemperatur des klimatisierten Raumes und der Temperatur des Kontaktelements, die über dem Taupunkt liegen muss, an dieser Stelle verloren.

Aufgabe der Erfindung ist es, ein gattungsgemässes Kontaktelement sowie Deckenelemente anzugeben, welche einen besseren Wärmeübergang zur Deckenplatte gewährleisten. Diese Aufgabe wird durch das Kontaktelement, wie es in den Ansprüchen gekennzeichnet ist sowie die angegebenen Deckenelemente gelöst.

Die durch die Erfindung erzielten Vorteile bestehen in erster Linie darin, dass der Wärmeübergang zwischen dem Kontaktelement und der Deckenplatte wesentlich verbessert und damit vor allem die Ausnutzung der durch den Taupunkt beschränkten Temperaturdifferenz zwischen dem zu klimatisierenden Raum und dem Kontaktelement besser ist.

Ausserdem werden Verbesserungen vorgeschlagen, die zusätzlich eine Vergrösserung der Kontaktfläche erlauben. Es hat sich nämlich gezeigt, dass wegen der schlechten Wärmeleitfähigkeit der üblichen Deckenplatten die Aufheizung und Abkühlung derselben im wesentlichen auf jene Bereiche beschränkt bleibt, die direkt unter dem Kontaktelement liegen. Aus diesem Grund ist es wünschenswert, die Kontaktfläche möglichst gross zu machen. Wegen Unebenheiten der Deckenplatte, vor allem der von ihrem Eigengewicht und dem Gewicht auf ihr lastender weiterer Teile wie eben des Kontaktelements verursachten Durchbiegung stösst dies bei starren Kontaktelementen bald auf Grenzen. Gemäss einer weiteren Ausführung der Erfindung ist die Kontaktplatte elastisch oder plastisch deformierbar ausgebildet, so dass sie sich an die Deckenplatte etwas anpasst und auch eine grosse Kontaktfläche zur Gänze auf derselben aufliegt. Zusätzlich unterstützt eine derartige Ausbildung der Kontaktplatte u. U. guten wärmeleitenden Kontakt derjenigen Teile der Kontaktfläche, die nicht mit der Deckenplatte verklebt sind, mit der letzteren.

Im folgenden wird die Erfindung anhand von Figuren, welche lediglich Ausführungsbeispiele darstellen, näher erläutert. Es zeigen
- Fig. 1a: eine Draufsicht auf ein erfindungsgemässes Deckenelement gemäss einer ersten Ausführungsform,
- Fig. 1b: vergrössert einen Querschnitt längs B-B in Fig. 1a,
- Fig. 2: einen Querschnitt durch ein erfindungsgemässes Deckenelement gemäss einer zweiten Ausführungsform,
- Fig. 3a: eine Draufsicht auf ein erfindungsgemässes Deckenelement gemäss einer dritten Ausführungsform,
- Fig. 3b: vergrössert einen Querschnitt längs B-B in Fig. 3a und
- Fig. 4: einen Querschnitt durch ein erfindungsgemässes Deckenelement gemäss einer vierten Ausführungsform,

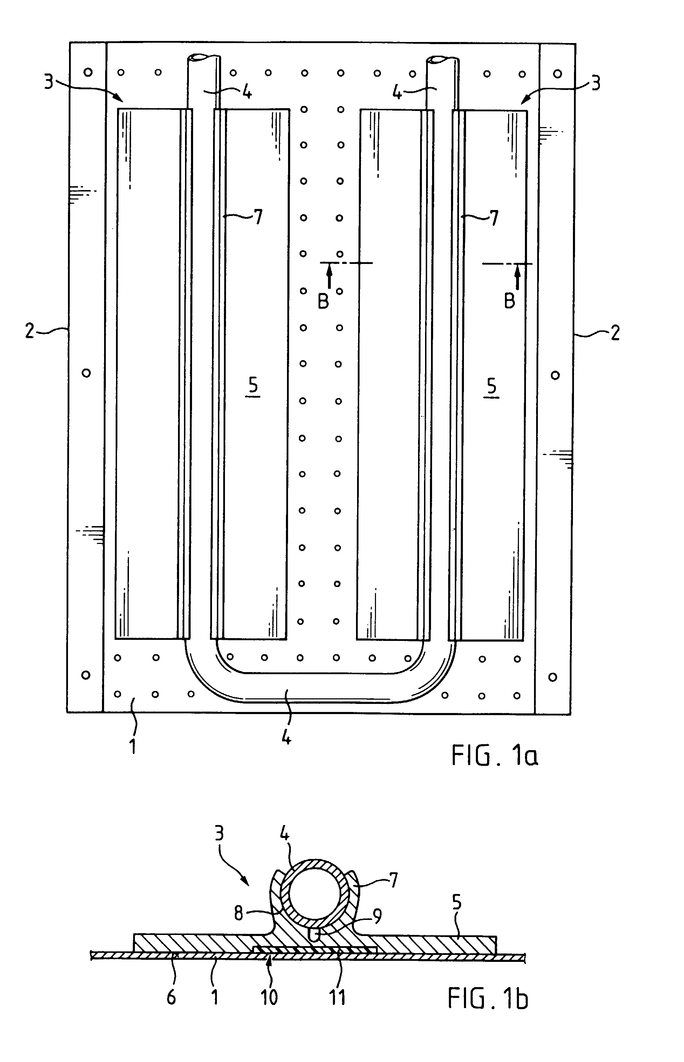

Das Deckenelement umfasst jeweils eine vorzugsweise, aber nicht notwendigerweise gelochte Deckenplatte 1 aus Aluminium, vorzugsweise Aluminiumblech, Stahlblech, Kunststoff, Gips oder Holz mit Seitenflanschen 2, welche zur Befestigung der Deckenplatte 1 z. B. an der Decke eines klimatisierten Raums dienen. An der Oberseite der Deckenplatte 1 sind beim Deckenelement gemäss der ersten Ausführungsform (Fig. 1a,b) parallel zwei Kontaktelemente 3 angeordnet, durch welche ein U-förmig gebogenes Rohr 4 aus Kupfer, Stahl oder Kunststoff gezogen ist.

Das Kontaktelement 3 besteht stets aus festem, vorzugsweise metallischem Material und ist im Beispiel vorzugsweise aus Aluminium extrudiert. Es weist eine rechteckige Kontaktplatte 5 auf, deren Unterseite eine im wesentlichen ebene Kontaktfläche 6 bildet, während an der Oberseite eine Führung 7 angeordnet ist. Diese bildet einen oben offenen Kanal 8, in welchen das Rohr 4 eingezogen oder eingepresst ist. Auf dem Grund des Kanals 8 ist eine in Längsrichtung durchgehende Biegenut 9 U-förmigen Querschnitts angeordnet, welche die Kontaktplatte 5 in zwei starre, aber unter elastischer Deformation an der Biegenut 9 gegeneinander geringfügig verschwenkbare Hälften teilt. Die Biegenut 9 dient zugleich als Entlüftungskanal. Die Kontaktfläche 6 weist in der Mitte eine in Längsrichtung durchgehende streifenförmige Klebevertiefung 10 auf, die mit einem Klebemittel, vorzugsweise einem beidseitg klebenden Klebeband 11 gefüllt ist, welches eine enge mechanische Verbindung zwischen der Kontaktfläche 6 und der Oberseite der Deckenplatte 1 herstellt. Die Klebevertiefung 10 weist eine Tiefe von etwa 0,1 mm bis 0,2 mm auf und nimmt einen Teil der Kontaktfläche 6 - ungefähr ein Drittel - ein.

Zur Herstellung des Deckenelements wird auf die Grundfläche der Klebevertiefung 10 das Klebeband 11 aufgebracht. Es ist etwas schmäler als die Klebevertiefung, während seine Dicke deren Tiefe geringfügig übersteigt. Anschliessend wird die Kontaktfläche 6 unter Erwärmung der Kontaktplatte 5 und der Deckenplatte 1 gegen die Oberseite der letzteren gepresst und so das Kontaktelement 3 mit der Deckenplatte 1 verklebt. Dabei wird das Klebeband 11 etwas breitgedrückt, sodass es die Klebevertiefung 10 praktisch vollständig ausfüllt.

Neben der Klebevertiefung 10 steht die Kontaktfläche 6 beidseits in engem direktem Kontakt mit der Oberseite der Deckenplatte 1, ohne dass der Wärmefluss durch eine dazwischenliegende Klebstoffschicht geringer Wärmeleitfähigkeit behindert würde. Die beiden Hälften der Kontaktfläche können sich dabei der Oberseite der Deckenplatte 1 anpassen, da sie nicht völlig starr verbunden sind und längs der Biegenut 9 geringfügig verschwenkbar sind. Jede der beiden Hälften überschneidet sich mit der Klebevertiefung 10, so dass dieselben unabhängig fest mit Deckenplatte verbunden sind und guter Kontakt auch der nicht verklebten Teile der Kontaktfläche 6 mit der Oberseite der Deckenplatte 1 gesichert ist. Dies kann durch eine Vorspannung der Kontaktplatte 5 verstärkt sein, derart, dass die beiden Hälften derselben vor der Verklebung des Kontaktelements 3 mit der Deckenplatte 1 leicht gegeneinander geneigt sind, d. h. die ihnen zugehörigen Hälften der Kontaktfläche 6 einen Winkel einschliessen, der geringfügig kleiner ist als 180°.

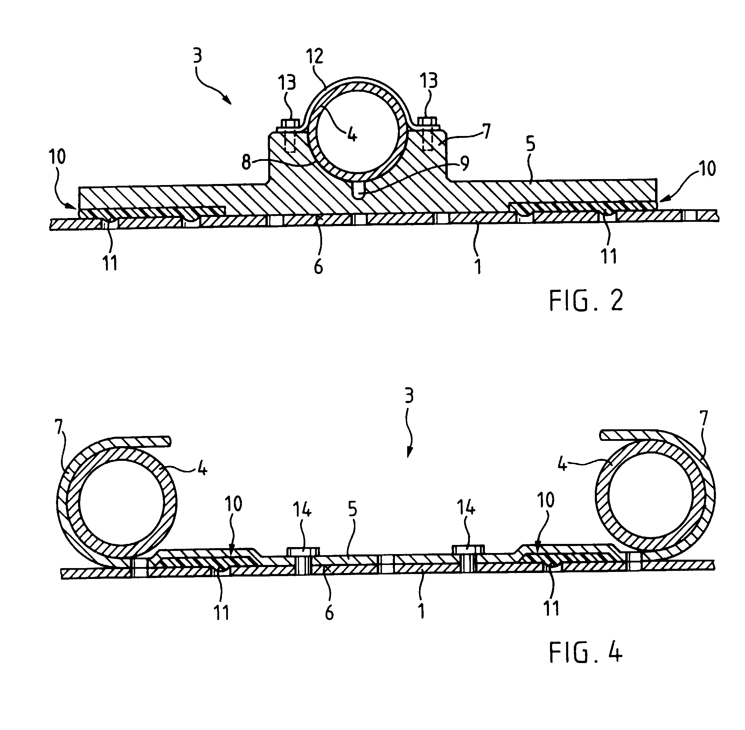

Gemäss der zweiten Ausführungsform (Fig. 2), die sich von der ersten praktisch nur durch ein modifiziertes Kontaktelement 3 unterscheidet, sind an den Rändern zwei streifenförmige Klebevertiefungen 10 angebracht, in denen wiederum Klebebänder 11 angeordnet sind und die zusammengenommen eine Klebefläche bilden, welche etwa die Hälfte der Kontaktfläche 6 einnimmt. Die Kontaktplatte 5 ist wiederum durch eine durchgehende Biegenut 9 in zwei geringfügig gegeneinander verschwenkbare starre Hälften geteilt, wobei jeder der entsprechenden Teile der Kontaktfläche 6 einen Teil der Klebefläche umfasst. Auch hier kann die Anpressung des nicht mit der Oberseite der Deckenplatte 1 verklebten, in diesem Fall mittleren Teils der Kontaktfläche 6 durch eine Vorspannung der Kontaktplatte 5 unterstützt sein. Der Winkel, den die beiden Hälften der Kontaktfäche 6 vor der Verklebung mit der Deckenplatte 1 einschliessen, muss in diesem Fall etwas grösser als 180° sein.

Der Kanal 8 umfasst das Rohr 4 zur Hälfte, so dass dasselbe nicht eingezogen oder eingepresst zu werden braucht, sondern nachträglich eingelegt werden kann. Es wird durch elastische Briden 12, die durch in der Führung 7 verankerte Bolzen 13 niedergehalten werden, im Kanal 8 festgehalten und angedrückt.

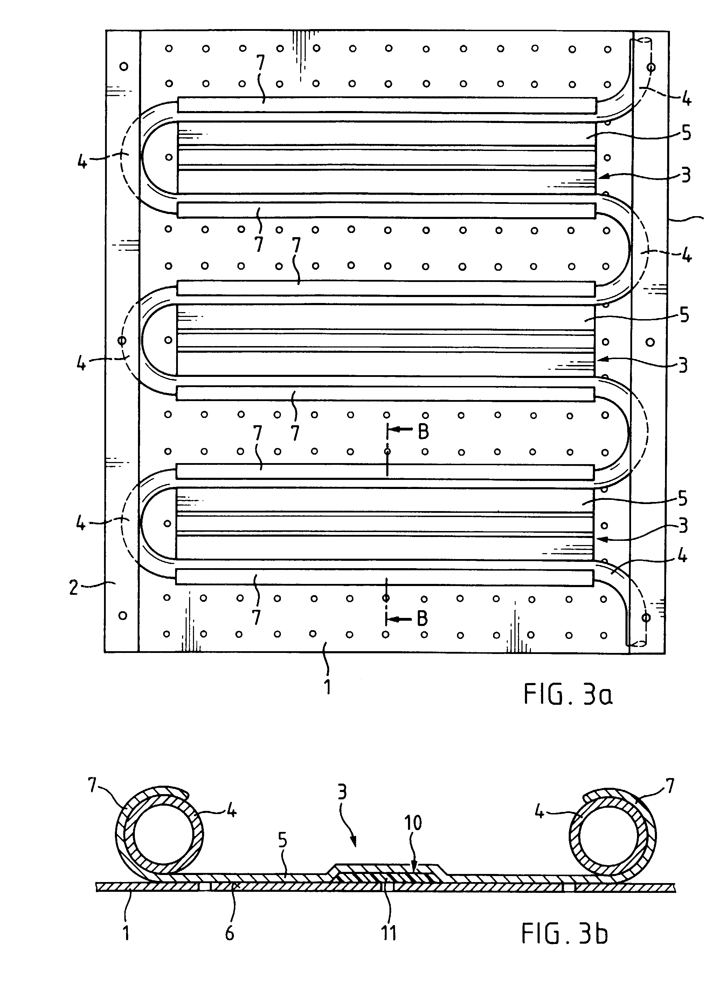

Bei einer dritten Ausführungsform (Fig. 3a,b) sind drei Kontaktelemente 3 an der Oberseite der Deckenplatte 1 angeordnet, durch die das Rohr 4 mäanderartig durchgezogen ist, wobei in jedem Kontaktelement 3 zwei parallele Rohrabschnitte geführt sind.

Das Kontaktelement 3 ist jeweils aus einem Streifen Blech, das vorzugsweise aus einer elastischen Kupferlegierung, z. B. Kupfer-Beryllium besteht, aber auch aus Aluminium bestehen kann, hergestellt und bildet eine Kontaktplatte 5, welche an den Rändern zu Führungen 7 umgebogen ist, welche das Rohr 4 an der Aussenseite umfassen. Die Führung 7 ist jeweils so ausgebildet, dass sie das Rohr 4 an der äusseren Hälfte und etwas darüber hinaus umfasst und elastisch auf dasselbe drückt. Das Rohr 4 ist unter leichter Biegung der Führungen 7 nach aussen einschiebbar. Die Führungen 7 können auch so ausgebildet sein, dass sie nur leicht über die halbe Höhe des Rohres 4 reichen, so dass dasselbe von oben in die Führungen 7 einschnappbar ist.

Die Kontaktplatte 5 weist mittig eine flache Einbuchtung auf, welche eine in Längsrichtung durchgehende streifenförmige Klebevertiefung 10 in der Kontaktfläche 6 bildet, in der wiederum ein Klebeband 11 angebracht ist. Auch hier kann die Kontaktplatte 5 eine leichte Vorspannung aufweisen und vor der Verklebung mit der Deckenplatte 1 nach unten etwas konkav sein, so dass die nicht mit der Deckenplatte 1 verklebten seitlichen Streifen der Kontaktfläche 6 fest an die Oberseite der Deckenplatte 1 angepresst werden.

Gemäss der vierten Ausführungsform (Fig. 4) ist gegenüber der dritten das Kontaktelement 3 etwas abgeändert. Es ist aus Kupferblech oder Aluminiumblech hergestellt und weist wiederum zwei von Umbiegungen an den Rändern gebildete Führungen 7 auf, die an der äusseren Hälfte des Rohres 4 anliegen. Ihr Innendurchmesser kann geringfügig kleiner gewählt werden als der Aussendurchmesser des Rohres 4, so dass sie beim Einschieben desselben leicht deformiert werden und dann ein guter Kontakt zwischen der Führung 7 und dem Rohr 4 gewährleistet ist.

Die Kontaktplatte 5 weist zwei flache Einbuchtungen auf, die in den Randbereichen der Kontaktfläche 6 wiederum in Längsrichtung durchgehende streifenförmige Klebevertiefungen 10 bilden. Die Klebevertiefungen 10 sind verhältnismässig schmal, so dass die gesamte Klebefläche deutlich weniger als die Hälfte der Kontaktfläche 6 einnimmt. Die Kontaktplatte 5 kann vor der Verklebung mit der Deckenplatte 1 in der Mitte nach unten leicht konvex sein, sodass sie durch das Anpressen beim Verkleben geringfügig - wegen der geringen Elastizität des Kupfers oder Aluminiums im wesentlichen plastisch - deformiert wird und der mittige nicht verklebte Streifen der Kontaktfläche 6 dann eng an der Oberseite der Deckenplatte 1 anliegt.

Die Kontaktplatte 5 weist überdies eine Lochung auf, welche mit derjenigen der Deckenplatte 1 im wesentlichen kongruent ist. Damit die Löcher in der Kontaktplatte 5 sich mit denjenigen in der Deckenplatte 1 decken, sind in mindestens zwei Löcher der Kontaktplatte 5 Positionierungsstifte 14 eingesteckt, die über die Kontaktfläche 6 hinausragen. Das Kontaktelement 3 wird vor dem Verkleben derart auf der Deckenplatte 1 positioniert, dass die Positionierungsstifte mit Löchern in der Deckenplatte 1 eingreifen, was sicherstellt, dass auch die übrigen Löcher zur Deckung gebracht sind. Die Löcher in der Kontaktplatte 5 können dabei etwas grösser sein als diejenigen in der Deckenplatte 1, so dass kleinere Abweichungen in den Lochpositionen oder geringfügige Verschiebungen nicht stören. Nach dem Verkleben des Kontaktelements 3 mit der Deckenplatte 1 durch Verpressen unter Erwärmung können die Positionierungsstifte 14 entfernt werden. Durch die kongruenten Lochungen wird die lärmdämpfende Wirkung einer allfällig oberhalb des Kontaktelements angeordneten Isolationsmatte oder eines ähnlichen Dämpfungselements wesentlich verbessert.

In den geschilderten Beispielen sind die Kontaktplatten in Längsrichtung im wesentlichen starr und nur in Querrichtung deformierbar. Dies ist ausreichend, wenn eine stärkere Durchbiegung der Deckenplatte nur nach einer Richtung auftritt, zu der die Kontaktelemente dann quer ausgerichtet sein sollten. Geringe Durchbiegungen in Längsrichtung der Kontaktelemente werden von denselben aufgefangen, d. h. die Deckenplatte passt sich durch die Klebeverbindung dem starren Kontaktelement an. Bei stärkerer Durchbiegungstendenz in Längsrichtung der Kontaktelemente würde dies aber die Klebeverbindungen zu stark belasten. In Fällen, wo die Durchbiegung nach zwei Richtungen verhältnismässig stark ist, ist es daher vorzuziehen, die Kontaktelemente auch nach zwei Richtungen deformierbar auszubilden, indem die Führungen unterbrochen und in mehrere Abschnitte geteilt sowie erforderlichenfalls zusätzlich querverlaufende Biegenuten vorgesehen werden. Das Rohr sollte dann ebenfalls biegsam, z. B. als Kunststoffrohr ausgebildet oder sogar durch einen Schlauch ersetzt sein.

Auch die Klebevertiefungen können natürlich unterbrochen sein und brauchen nicht in Längsrichtung durchgehend ausgebildet zu sein. Zur Sicherung guten Wärmeübergangs zwischen den nicht verklebten Teilen der Kontaktfläche und der Oberseite der Deckenplatte sollte allerdings der Abstand der ersteren von der Klebefläche nicht zu gross sein und z. B. 100 mm nicht überschreiten.

Es ist trotzdem nicht unbedingt nötig, dass die Klebeflächen, also die mit der Deckenplatte 1 verklebten Bereiche der Kontaktfläche 6, wie in den Ausführungsbeispielen an die nicht verklebten Teile der Kontaktfläche unmittelbar anschliessen und von denselben durch eine Stufe abgegrenzte Klebevertiefungen bilden, wenn dies auch einen besonders kompakten und günstigen Aufbau des Kontaktelements 3 mit kompakter Kontaktplatte 5 und zusammenhängender Kontaktfläche 6 erlaubt. In der allgemeinsten Fassung geht der Erfindungsgedanke dahin, dass ein Teil der Kontaktfläche 6 eine mit der Oberseite der Deckenplatte 1 verklebte Klebefläche bildet, während ein weiterer Teil, der nicht unbedingt an die Klebefläche angrenzen muss, ohne die Wärmeleitung behindernde dazwischenliegende Klebstoffschicht gegen die Deckenplatte 1 gedrückt wird, wobei die Klebeverbindung als Verankerung dient. Dies kann besonders günstig durch elastische Deformation des Kontaktelements 3, eventuell auch der Deckenplatte 1, geschehen, wobei die elastische Deformation auch eine blosse Restspannung nach einer im wesentlichen plastischen Deformation während des Verklebens sein kann.

Durch die in Querrichtung deformierbare Ausbildung der Kontaktplatte, wie sie im Zusammenhang mit den vier Ausführungsbeispielen geschildert wurde, ist es übrigens möglich, die Breite der Kontaktflächen grösser als bisher üblich zu wählen, z. B. 70 mm oder mehr. Dieser Vorteil ist natürlich auch dann gegeben, wenn die Kontaktfläche keine Klebevertiefungen aufweist und die gesamte Kontaktfläche mit der Oberseite der Deckenplatte verklebt ist.

## Patentansprüche

1. Kontaktelement für eine Heiz- und Kühldecke mit mindestens einer von einem Wärmeträgermedium durchströmten Führung (7) sowie mindestens einer von einer Kontaktplatte (5), welche mit der mindestens einen Führung (7) in wärmeleitender Verbindung steht, gebildeten Kontaktfläche (6), dadurch gekennzeichnet, dass die Kontaktfläche (6) eine von mindestens einer flachen Klebevertiefung (10) zur Aufnahme eines Klebemittels gebildete Klebefläche umfasst.

2. Kontaktelement nach Anspruch 1, dadurch gekennzeichnet, dass der Anteil der Klebefläche an der Kontaktfläche (6) höchstens 50% ausmacht.

3. Kontaktelement nach Anspruch 1 oder 2, dadurch gekennzeichnet, dass kein Teil der Kontaktfläche (6) mehr als 100 mm von der Klebefläche entfernt ist.

4. Kontaktelement nach Anspruch 1 oder 2, dadurch gekennzeichnet, dass die Kontaktplatte (5) elastisch oder plastisch deformierbar ist.

5. Kontaktelement nach einem der Ansprüche 1 bis 4, dadurch gekennzeichnet, dass die Kontaktfläche (6) länglich ist und die Klebefläche von einer oder mehreren sich im wesentlichen über ihre ganze Länge erstreckenden Klebevertiefungen (10) gebildet wird.

6. Kontaktelement nach Anspruch 5, dadurch gekennzeichnet, dass die Breite der Kontaktfläche (6) mindestens 70 mm beträgt.

7. Kontaktelement nach Anspruch 5 oder 6, dadurch gekennzeichnet, dass die Klebefläche als mittig in der Kontaktfläche (6) angeordneter Streifen ausgebildet ist.

8. Kontaktelement nach Anspruch 5 oder 6, dadurch gekennzeichnet, dass die Klebefläche als Paar von an den Rändern der Kontaktfläche (6) angeordneten Streifen ausgebildet ist.

9. Kontaktelement nach einem der Ansprüche 4 bis 8, dadurch gekennzeichnet, dass die Kontaktplatte (5) aus mindestens zwei im wesentlichen starren Bereichen besteht, welche durch mindestens eine zur Kontaktfläche (6) parallele durchgehende Biegenut (9) getrennt sind.

10. Kontaktelement nach Anspruch 9, dadurch gekennzeichnet, dass jeder der starren Bereiche eine Klebevertiefung (10) umfasst oder sich mit einer solchen überschneidet.

11. Kontaktelement nach Anspruch 9 oder 10, dadurch gekennzeichnet, dass die mindestens eine Führung (7) gerade ist oder mehrere gerade Abschnitte umfasst, in deren Bereich jeweils parallel eine Biegenut (9) angeordnet ist.

12. Kontaktelement nach Anspruch 11, dadurch gekennzeichnet, dass die Biegenut (9) jeweils am Grund der Führung (7) bzw. des Abschnitts angeordnet ist.

13. Kontaktelement nach einem der Ansprüche 4 bis 8, dadurch gekennzeichnet, dass die Kontaktplatte (5) durchgehend elastisch oder plastisch deformierbar ist.

14. Kontaktelement nach Anspruch 13, dadurch gekennzeichnet, dass die mindestens eine Führung (7) von einer Umbiegung der Kontaktplatte (5) am Rand gebildet wird.

15. Kontaktelement nach einem der Ansprüche 1 bis 14, dadurch gekennzeichnet, dass die Kontaktplatte (5) gelocht ist.

16. Kontaktelement nach Anspruch 15, dadurch gekennzeichnet, dass die Kontaktplatte (5) mindestens zwei über die Kontaktfläche (6) hinausragende Positionierungsstifte (14) trägt.

17. Kontaktelement nach Anspruch 16, dadurch gekennzeichnet, dass die Positionierungsstifte (14) entfernbar in Löcher der Kontaktplatte (5) eingesteckt sind.

18. Deckenelement für eine Heiz- und Kühldecke mit einer Deckenplatte (1) sowie mindestens einem Kontaktelement (3) nach einem der Ansprüche 1 bis 17, welches an seiner Klebefläche mit der Deckenplatte (1) verklebt ist.

19. Deckenelement nach Anspruch 18, mit mindestens einem Kontaktelement (3) nach einem der Ansprüche 4 bis 17, dadurch gekennzeichnet, dass die Kontaktplatte (5) derart vorgespannt ist, dass die nicht zur Klebefläche gehörenden Teile der Kontaktfläche (6) an die Deckenplatte (1) angedrückt werden.

20. Deckenelement nach Anspruch 18 oder 19 mit mindestens einem Kontaktelement (3) nach einem der Ansprüche 15 bis 17, dadurch gekennzeichnet, dass die Deckenplatte (1) eine mit derjenigen der Kontaktplatte (5) kongruente Lochung aufweist.

21. Deckenelement nach Anspruch 20, dadurch gekennzeichnet, dass als Schallabsorptionseinrichtung eine oberhalb des mindestens einen Kontaktelements (3) angeordnete Isolationsmatte vorgesehen ist.

22. Deckenelement für eine Heiz- und Kühldecke mit einer Deckenplatte (1) sowie mit mindestens einem Kontaktelement (3) mit mindestens einer von einem Wärmeträgermedium durchströmten Führung (7) sowie einer von mindestens einer Kontaktplatte (5), welche mit der mindestens einen Führung (7) in wärmeleitender Verbindung steht, gebildeten Kontaktfläche (6), welche eine mit der Deckenplatte (1) verklebte Klebefläche umfasst, dadurch gekennzeichnet, dass ein nicht mit der Deckenplatte (1) verklebter Teil der Kontaktfläche (6) unter elastischer Deformation des Kontaktelements (3) oder der Deckenplatte (1) an die letztere angedrückt ist.

## Claims

1. Contact element for a heating and cooling ceiling, having at least one guide (7) through which a heat transfer medium flows, and having at least one contact surface (6) which is formed by a contact panel (5) being in heat-conducting connection with the at least one guide (7), characterized in that the contact surface (6) comprises an adhesive surface which is formed by at least one shallow adhesive depression (10) for receiving an adhesive means.

2. Contact element according to Claim 1, characterized in that the adhesive surface makes up not more than 50% of the contact surface (6).

3. Contact element according to Claim 1 or 2,
characterized in that no part of the contact surface (6) is more than 100 mm away from the adhesive surface.

4. Contact element according to Claim 1 or 2,
characterized in that the contact panel (5) is elastically or plastically deformable.

5. Contact element according to one of Claims 1 to 4, characterized in that the contact surface (6) is elongate, and the adhesive surface is formed by one or more adhesive depressions (10) extending essentially over the entire length of said adhesive surface.

6. Contact element according to Claim 5, characterized in that the width of the contact surface (6) is at least 70 mm.

7. Contact element according to Claim 5 or 6,
characterized in that the adhesive surface is designed as a strip arranged centrally in the contact surface (6).

8. Contact element according to Claim 5 or 6,
characterized in that the adhesive surface is designed as a pair of strips arranged at the borders of the contact surface (6).

9. Contact element according to one of Claims 4 to 8,
characterized in that the contact panel (5) comprises at least two essentially rigid regions which are separated by at least one continuous bending groove (9) parallel to the contact surface (6).

10. Contact element according to Claim 9, characterized in that each of the rigid regions comprises an adhesive depression (10) or intersects such a depression.

11. Contact element according to Claim 9 or 10,
characterized in that the at least one guide (7) is rectilinear or comprises a plurality of rectilinear sections, in the region of which a bending groove (9) is arranged in parallel in each case.

12. Contact element according to Claim 11, characterized in that the bending groove (9) is arranged in each case on the base of the guide (7) or of the section.

13. Contact element according to one of Claims 4 to 8, characterized in that the contact panel (5) is elastically or plastically deformable throughout.

14. Contact element according to Claim 13, characterized in that the at least one guide (7) is formed by the contact panel (5) being bent over at the border.

15. Contact element according to one of Claims 1 to 14, characterized in that the contact panel (5) is perforated.

16. Contact element according to Claim 15, characterized in that the contact panel (5) bears at least two positioning pins (14) which project beyond the contact surface (6).

17. Contact element according to Claim 16, characterized in that the positioning pins (14) are inserted into holes of the contact panel (5) such that they can be removed.

18. Ceiling element for a heating and cooling ceiling, having a ceiling panel (1) and at least one contact element (3) according to one of Claims 1 to 17, which is adhesively bonded, on its adhesive surface, to the ceiling panel (1).

19. Ceiling element according to Claim 18, having at least one contact element (3) according to one of Claims 4 to 17, characterized in that the contact panel (5) is prestressed such that the parts of the contact surface (6) which do not belong to the adhesive surface are pressed onto the ceiling panel (1).

20. Ceiling element according to Claim 18 or 19, having at least one contact element (3) according to one of Claims 15 to 17, characterized in that the ceiling panel (1) has perforations which are congruent with those of the contact panel (5).

21. Ceiling element according to Claim 20, characterized in that an insulation mat arranged above the at least one contact element (3) is provided as a sound-absorption means.

22. Ceiling element for a heating and cooling ceiling, having a ceiling panel (1) and having at least one contact element (3) with at least one guide (7) through which a heat transfer medium flows, and having a contact surface (6) which is formed by at least one contact panel (5), in heat-conducting connection with the at least one guide (7), and which comprises an adhesive surface which is adhesively bonded to the ceiling panel (1), characterized in that a part of the contact surface (6) which is not adhesively bonded to the ceiling panel (1) is pressed onto the latter, the contact element (3) or the ceiling panel (1) being elastically deformed.

## Revendications

1. Elément de contact pour chauffage et refroidissement par le plafond avec au moins un guidage (7) traversé par un agent caloporteur ainsi qu'une surface de contact (6) formée d'au moins une plaque de contact (5), qui est en liaison thermoconductrice avec au moins un guidage (7), caractérisé par le fait que la surface de contact (6) englobe une surface adhésive formée d'au moins un dégagement pour l'adhésif (10) plat pour l'application d'un adhésif.

2. Elément de contact selon la revendication 1 caractérisé par le fait que la part de surface adhésive représente au maximum 50% de la surface de contact (6).

3. Elément de contact selon la revendication 1 ou 2 caractérisé par le fait qu'aucune partie de la surface de contact (6) n'est éloignée de plus de 100 mm de la surface adhésive.

4. Elément de contact selon la revendication 1 ou 2 caractérisé par le fait que la plaque de contact (5) peut subir une déformation élastique ou plastique.

5. Elément de contact selon l'une des revendications 1 à 4 caractérisé par le fait que la surface de contact (6) est oblongue et que la surface adhésive est formée d'un ou plusieurs dégagements pour l'adhésif (10) qui s'étendent, pour l'essentiel, sur toute sa longueur.

6. Elément de contact selon la revendication 5 caractérisé par le fait que la largeur de la surface de contact (6) s'élève à 70 mm au minimum.

7. Elément de contact selon la revendication 5 ou 6 caractérisé par le fait que la surface adhésive est constituée de bandes disposées au centre de la surface de contact (6).

8. Elément de contact selon la revendication 5 ou 6 caractérisé par le fait que la surface adhésive est constituée de bandes disposées par paires sur les bords de la surface de contact (6).

9. Elément de contact selon l'une des revendications 4 à 8 caractérisé par le fait que la plaque de contact (5) se compose d'au moins deux zones essentiellement rigides qui sont séparées par au moins une gorge arrondie (9) traversante parallèle à la surface de contact (6).

10. Elément de contact selon la revendication 9 caractérisé par le fait que chacune des zones rigides comprend ou chevauche un dégagement (10) pour l'adhésif.

11. Elément de contact selon la revendication 9 ou 10 caractérisé par le fait que ce au moins un guidage (7) est droit ou comprend plusieurs sections droites dans la zone desquelles est disposée une gorge arrondie (9).

12. Elément de contact selon la revendication 11 caractérisé par le fait que la gorge arrondie (9) est disposée à la base du guidage (7) ou de la section.

13. Elément de contact selon l'une des revendications 4 à 9 caractérisé par le fait que la plaque de contact (5) peut subir une déformation élastique ou plastique en continu.

14. Elément de contact selon la revendication 13 caractérisé par le fait que ce au moins un guidage (7) soit formé par une courbure de la plaque de contact (5) en son extrémité.

15. Elément de contact selon l'une des revendications 1 à 14 caractérisé par le fait que la plaque de contact (5) est perforée.

16. Elément de contact selon la revendication 15 caractérisé par le fait que la plaque de contact (5) porte au moins deux broches de positionnement (14) qui dépassent de la surface de contact (6).

17. Elément de contact selon la revendication 16 caractérisé par le fait que les broches de positionnement (14) sont insérées dans les trous de la plaque de contact (5) de manière à pouvoir être retirées de ceux-ci.

18. Elément de plafond pour chauffage et refroidissement par le plafond avec une plaque de plafond (1) et au moins un élément de contact (3) selon l'une des revendications 1 à 17 dont la surface adhésive est collée à la plaque de plafond (1).

19. Elément de plafond selon la revendication 18 avec au moins un élément de contact (3) selon l'une des revendications 4 à 17 caractérisé par le fait que la plaque de contact (5) subit une prétension de telle sorte que les parties de la surface de contact (6) qui n'appartiennent pas à la surface adhésive sont comprimées contre la plaque de plafond (1).

20. Elément de plafond selon la revendication 18 ou 19 avec au moins un élément de contact (3) selon l'une des revendications 15 à 17 caractérisé par le fait que la plaque de plafond (1) comporte une perforation qui coïncide avec celle de la plaque de contact (5).

21. Elément de plafond selon la revendication 20 caractérisé par le fait qu'une natte d'isolation disposée au-dessus d'au moins un élément de contact (3) est prévue en tant que dispositif d'absorption acoustique.

22. Elément de plafond pour chauffage et refroidissement par le plafond avec une plaque de plafond (1) et au moins un élément de contact (3) équipé au moins d'un guidage (7) traversé par un agent caloporteur et d'une surface de contact (6) formée d'au moins une plaque de contact (5) en liaison thermoconductrice avec un guidage qui englobe une surface adhésive collée à la plaque de plafond, caractérisé par le fait qu'une partie de la surface de contact (6) non collée à la plaque de plafond (1) est comprimée contre cette dernière lors d'une déformation élastique de l'élément de contact (3) ou de celle de la plaque de plafond (1).
